# EUROPÄISCHE PATENTSCHRIFT

(11) **EP 1 908 576 B1**
(45) Veröffentlichungstag und Bekanntmachung des Hinweises auf die Patenterteilung: **01.03.2017**
(21) Anmeldenummer: 07018766.1
(22) Anmeldetag: 25.09.2007
(51) Int. Cl.: C08J 9/32, D06N 3/00, B29C 70/66, B32B 5/24, B32B 9/02, B32B 9/04, B29C 44/44, D06N 3/06, B29K 711/08, B29K 27/06

(54) **Verwendung eines Polyvinylchlorid-Schaummaterials im Fahrzeugbau**
Application of a polyvinyl foam material in vehicle construction
Utilisation d'un matériau en mousse de polychlorure de vinyle dans la structure d'un véhicule

(30) Priorität: 02.10.2006 DE 102006046868; 26.01.2007 DE 102007003993
(43) Veröffentlichungstag der Anmeldung: 09.04.2008
(73) Patentinhaber: Hornschuch Stolzenau GmbH, 31592 Stolzenau (DE)
(72) Erfinder: Noack, Kurt-Michael, 31592 Stolzenau (DE); Neto, Leal Marques, Rossio ao Sul do Tejo 2205-063 Abrantes (PT)
(74) Vertreter: Wagner Albiger & Partner Patentanwälte mbB

(56) Entgegenhaltungen:
- EP-A- 0 304 550
- EP-A- 1 300 474
- EP-A1- 0 887 382
- US-A- 4 510 201
- US-A- 5 053 436
- US-A1- 2004 059 010

## Beschreibung

Die vorliegende Erfindung betrifft die Verwendung eines Polyvinylchlorid-Schaummaterials im Fahrzeugbau.

PVC-Schaummaterialien sind aus dem Stand der Technik hinlänglich bekannt und können insbesondere vorteilhaft zur dekorativen Ausgestaltung von Fahrzeuginnenräumen eingesetzt werden. PVC-Schaummaterialien können kostengünstig hergestellt werden, wobei einfache und energiesparende Streichverfahren eingesetzt werden können, die im Stand der Technik ebenfalls bekannt sind.

PVC-Schaummaterialien werden derzeit durch Einsatz chemischer Treibmittel - vorzugsweise Azodicarbonamid - hergestellt. Dabei zersetzen sich die Treibmittel in Gase und expandieren in kleinen Schaumblasen. Mit diesem Verfahren, das im allgemeinen als chemisches Schäumen bezeichnet wird, sind minimale Dichten von etwa 300 kg/m³ erreicht worden.

Die Anwendung von eingebrachter Luft und ihre nachträgliche Expansion in kleinen Schaumblasen ist unter der allgemeinen Bezeichnung des physikalischen Schäumens bekannt. Da dieses Verfahren wesentlich komplizierter und nur in engen Grenzen einstellbar ist, hat es sich für PVC-Schaummaterialien nicht in großem Maße durchgesetzt, insbesondere aufgrund des sehr breiten Spektrums unterschiedlicher, exakt bestimmter, spezifischer Anforderungen für solche Materialien, obwohl durch das physikalische Schäumen eine im Vergleich zum chemischen Schäumen leicht reduzierte Dichte des PVC eingestellt werden kann. Das physikalische Schäumen hat sich ebenfalls als nachteilig erwiesen in Bezug auf die erheblichen Belastungen des PVC-Schaummaterials bei der Folgeverarbeitung. Unter anderem müssen PVC-Schaumfolien die hohen Belastungen in Form von Temperatur, Druck oder Vakuum, sowie einer oft erheblichen Verstreckung, insbesondere zur Anpassung an mehrdimensionale Formteilgeometrien, überstehen. Auch ergibt sich im Rahmen des physikalischen Schäumens ein problematisches Produktionshandling der instabilen, nur eingeschränkt lagerfähigen, luftbeladenen Schaumplastisole, die zudem durch die niedrige Dichte ein erhebliches Zwischenlagervolumen ausbilden.

Die PVC-Schaummaterialien sollen eine hohe mechanische Stabilität aufweisen, die sich am einfachsten mit Zugfestigkeit, Querzugfestigkeit, Druckfestigkeit, Verformungsrest nach Druckbelastung und Biegesteifigkeit beschreiben lässt. Auch sollen solche Materialien bei subjektiver Wahrnehmung eine angenehme Haptik oder Weichheit aufweisen.

Bei PVC-Schaummaterialien aus dem Stand der Technik bestand bislang die Schwierigkeit, daß diese nicht mit einer hinreichend minimalen Dichte hergestellt werden konnten, was Energie- und Gewichtseinsparungen insbesondere bei Verwendung im Fahrzeugbau nicht ermöglichte. In diesem Zusammenhang wurden Alternativmaterialien aus Polyurethan und thermoplastischem Polyolefin vorgeschlagen, die trotz schlechterer Wirtschaftlichkeit eine gewissen Einsparung ermöglichten.

Ein Weg zur Erniedrigung der Dichte von PVC-Schaummaterialien ist die Anwendung von Glashohlkugeln oder Blähtonen entsprechender Feinheit. Hier ergibt sich jedoch ebenfalls das oben beschriebene schlechte Druckverformungsverhalten. Auch zeigt sich eine verschlechterte Zwischenlagerfähigkeit, da die Hohlkugelmaterialien durch ihre extrem niedrige Dichte zum Entmischen aus den PVC-Dispersionen neigen.

Druckschrift EP 0 887 382 A1 offenbart PVC-Schaummaterialien gemäß dem Oberbegriff des Anspruchs 1.

Die aus dem Stand der Technik bekannten PVC-Schaummaterialien weisen bezüglich der dekorativen Ausgestaltung von Fahrzeuginnenräumen, der Haptik und dem Gewicht noch deutliche Verbesserungsmöglichkeiten auf.

Es ist somit eine Aufgabe der vorliegenden Erfindung, die Nachteile aus dem Stand der Technik zu überwinden und den Einsatz von PVC-Schaummaterialien im Fahrzeugbau zu ermöglichen, die eine bessere dekorative Ausgestaltung der Fahrzeuginnenräume ermöglichen, zu einer verbesserten Haptik und zu einer deutlichen Gewichtsreduktion im Vergleich zu herkömmlich eingesetzten Materialien führen.

Die Aufgabe wird erfindungsgemäß gelöst durch die Verwendung eines Polyvinylchlorid-Schaummaterials im Fahrzeugbau, gemäß Anspruch 1. Das PVC-Schaummaterial weist eine Dichte von 100-300 kg/m³ auf. Zur Herstellung wird dispergiertes Polyvinylchlorid mit Hohlkugeln aus einem thermoplastischen Kunststoffmaterial, die eine niedrig siedende Flüssigkeit mit einem Siedepunkt von unter 110°C enthalten, vermischt und die erhaltene Mischung wird geliert, um einen Schaum zu ergeben.

Das PVC kann in üblichen Weichmachern dispergiert werden. Beispiele hierfür sind Phthalatdiester, Adipinsäurediester, mit Alkoholen, die verzweigt oder unverzweigt vorliegen können und vorzugsweise einen Kettenlängenbereich von C₄-C₁₃ aufweisen. Ebenfalls sind Polymerweichmacher als Ester der vorstehenden Säuren mit geeigneten, entsprechenden Polyolen möglich. Besonders bevorzugt sind physiologisch verträgliche Zitronensäureester mit den oben beschriebenen Alkoholen einsetzbar.

Dabei wird bevorzugt, daß das thermoplastische Kunststoffmaterial ausgewählt ist aus Polyurethan, Polyolefin, Poly(meth)acrylat, Polyacrylnitril, Polyacetonitril, Copolymeren derselben, Silikon und Mischungen derselben.

Besonders bevorzugt ist ferner, daß daß die Hohlkugeln aus Polyacetonitril, Poly(meth)acrylat oder Mischungen derselben sind.

Alternativ wird bevorzugt vorgesehen, daß thermoplastisches und/oder elastisches Polyurethan ausgewählt wird, das vorzugsweise weichmacherresistent ist.

In einer weiteren Ausführungsform wird vorgesehen, daß die Mischung ferner Weichmacher, Pigmente und/oder Stabilisatoren umfasst.

Das dispergierte PVC umfasst PVC-Vinylacetat-Copolymer. Das PVC-Vinylacetat-Copolymer wird in einem Anteil von 15 bis 25 Gew.-%, bezogen auf den gesamten PVC-Anteil eingesetzt.

In einer weiteren Ausführungsform sind die Hohlkugeln in einer Menge von 0,5 bis 10 Gewichtsprozent in der Mischung vorgesehen, basierend auf dem Gesamtgewicht der Mischung. Desweiteren ist bevorzugt, daß die Mischung ferner chemische und/oder physikalische Treibmittel umfasst, wobei das Gelieren bei einer Temperatur zwischen 150 und 220°C durchgeführt wird.

In einer bevorzugten Ausführungsform ist vorgesehen, daß die niedrig siedenden Flüssigkeit ausgewählt wird aus n-Butan, n-Pentan, n-Hexan und n-Heptan.

Besonders bevorzugt ist vorgesehen, daß das thermoplastische Kunststoffmaterial mit einem thermoplastischen Erweichungsbereich zwischen 130 und 220°C ausgewählt wird.

Auch wird vorgeschlagen, daß die Größe der Hohlkugeln 5 bis 70 µm beträgt, vorzugsweise etwa 30 bis 40 µm.

Erfindungsgemäß ist ebenfalls, daß das Schaummaterial bevorzugt offenzellig ist.

Des weiteren ist vorgesehen, daß das PVC-Schaummaterial ein Flächengewicht von 40 bis 900 g/m² aufweist.

Ferner wird erfindungsgemäß eine Verwendung im Fahrzeugbau als Innenraummaterial, Schaumfolie, Kunstleder oder Laderaumabdeckung vorgeschlagen

Auch kann vorgesehen sein, daß das Schaummaterial auf zumindest einer Oberfläche desselben eine Echtlederschicht aufweist.

Dabei ist bevorzugt, daß die Echtlederschicht eine Lederoberschicht oder Spaltlederschicht ist.

Ebenfalls wird vorgeschlagen, daß die Dicke der Echtlederschicht 0,1 bis 1,0 mm ist.

Eine Ausführungsform zeichnet sich ferner dadurch aus, daß die Dicke des PVC-Schaummaterials 0,5 bis 5,0 mm ist.

Schließlich wird vorgeschlagen, daß die Echtlederschicht an das PVC-Schaumledermaterial preßkaschiert und/oder klebekaschiert ist.

Erfindungsgemäß kann das besonders bevorzugte PVC-Schaummaterial in einem Mehrschichtaufbau aus PVC- oder anderen Materialien eingesetzt werden, so daß zumindest eine Schicht dieses PVC-Schaummaterial enthält. Das PVC-Schaummaterial kann in einer Mehrschichtanordnung beispielsweise mit einem üblichen ergänzenden kompakten Deckstrich und ggf. bei Kunstledern kompakten Kaschierstrich ein Flächengewicht von 400 bis 1250 g/m² mit einer bevorzugten Dicke von 1,0-5,0 mm aufweisen. Besonders bevorzugt ergibt sich eine PVC-Schaumfolie mit einer Dicke von 2,0 mm mit einem Flächengewicht von 700-850 g/m².

Das Schaummaterial kann vorzugsweise zur Egalisierung von Unebenheiten in Trägermaterialien, z.B. Geweben, eingesetzt werden, unter Nutzung der erzielbaren spezifischen velourartigen Oberflächenstruktur eines PVC-Schaums zur Dekorgestaltung.

Ein wesentliches Merkmal des erfindungsgemäß eingesetzten Polyvinylchlorid-Schaummaterials ist dessen geringe Dichte in einem Bereich von 100 bis 300 kg/m³, was zu einem sehr weichen PVC-Schaummaterial führt und die dekorativen Möglichkeiten der Ausgestaltung von Fahrzeuginnenräumen deutlich verbessert, insbesondere zu einer hervorragenden Haptik und zu einer deutlichen Gewichtsreduktion im Vergleich zu herkömmlichen Materialien führt. Bei erfindungsgemäßer Verwendung kann eine sehr weiche Veloursoberfläche erhalten werden.

Überraschenderweise wurde festgestellt, daß bei erfindungsgemäßer Verwendung im Vergleich zu aus dem Stand der Technik bekannten Schaummaterialien eine deutliche Gewichtseinsparung ermöglicht wird, jedoch noch stets eine gute mechanische Stabilität bewahrt wird. Besonders vorteilhaft ist, daß das Erweichungsverhalten des thermoplastischen Kunststoffmaterials und des PVC zur Optimierung des Schäumens und des Schäumungsverhaltens anpassbar ist.

Am bevorzugtesten werden erfindungsgemäß als thermoplastisches Kunststoffmaterial Polyacrylnitril, Poly(meth)acrylat oder Polyurethan eingesetzt, wobei der Begriff "Poly(meth)acrylat" Polymere auf Basis von Methacrylat und Acrylat umfassen soll. Alle thermoplastischen Kunststoffmaterialien können auch in Form von Copolymeren eingesetzt werden. Bevorzugt kann das Polyurethan weichelastisch eingestellt werden, wodurch sich anwendungstechnisch wesentliche bessere Schaumeigenschaften erzielen lassen. Insbesondere verbessert sich das Druckverformungsverhalten durch die dann weich ausgebildeten Poren deutlich. Durch den elastischen Charakter ergibt sich zudem eine Unempfindlichkeit gegenüber der Temperaturführung, weil bereits außerhalb des thermoplastischen Bereichs eine Expansion möglich ist und somit auch unter insgesamt reduziertem Widerstand abläuft.

Auch wurde erfindungsgemäß festgestellt, daß die Schaumfestigkeit eines erfindungsgemäßen PVC-Schaummaterials wesentlich höher ist im Vergleich zu aus dem Stand der Technik bekannten Schäumen, da das PVC an der Polyurethanoberfläche sehr hohe Haftungen erzielen kann. Ferner kann durch die große Einstellungsvielfalt von Polyurethanen zudem das Erweichungsverhalten sehr nahe an die Schaumbildungsbedingungen des PVC-Schaums angepasst werden.

Echtleder zeichnet sich durch sehr hohe Flächengewichte und je nach Aufbereitung durch eine unangenehme Steifheit und Starrheit aus. Die Ausbildung der charakteristischen Ledereigenschaften in der Haptik erfolgt jedoch durch eine relativ dünne Oberflächenschicht. Je dünner diese gestaltet werden kann, um so besser gelingt es, einen besonders geschmeidigen Griff zu erzielen. Da in den meisten Fällen jedoch eine Mindestdicke der Lederschicht ausgebildet werden muß, um die weiteren üblichen Anforderungen einer solchen Lederschicht zu erfüllen, sind prinzipiell Materialkombinationen möglich, die jedoch spezifische Nachteile aufweisen.

Im Anwendungsverhalten kann zudem ein wesentlicher Vorteil erzielt werden, da eine ausreichende Beständigkeit des thermoplastischen Materials gegenüber dem in der PVC-Paste enthaltenden Weichmacher erreichbar ist. Übliche PVC-Schaumpasten, die mit entsprechenden Hohlkugeln versetzt sind, sind über einen Zwischenlagerzeitraum ohne Beeinträchtigung des Aufschäumvermögens funktionsfähig. Eine weitere vorteilhafte Verbesserung der Schaumfestigkeit lässt sich erreichen, wenn ein Teil des PVC ein PVC-Vinylacetat-Copolymer ist. Bei Einsatz eines Copolymers wird das oben beschriebene Haftungsvermögens nochmals verbessert und die Reißdehnung über eine innere Plastifizierung verbessert.

Auch ist es möglich, mit dem Schaumaufbau gezielt Schäume mit unterschiedlichen Eigenschaften, wie Dichte, Weichheit, usw. herzustellen. Ferner kann ein PVC-Schaummaterial einen Schichtaufbau aufweisen, wobei Eigenschaften von Schicht zu Schicht variieren.

In einer bevorzugten Ausführungsform der Erfindung ist eine Verwendung möglich, mit der ein Material bereitgestellt wird, das eine sehr geschmeidige und damit haptisch attraktive O-berfläche aus Leder enthält und bei dem der allgemeine Dickenaufbau über einen deutlich leichteren PVC-Schaum realisiert wird, der seinerseits sehr flexibel und offenzellig ist, was die haptische Wahrnehmung deutlich unterstützt und somit sogar deutlich besser ausfällt als bei konventionellem Leder. Insbesondere können extrem niedrige Flächengewichte erzielt werden, was beim Fahrzeugbau zu deutlichen Vorteilen führt.

Neben dem Einsatz einer Echtlederoberschicht ist auch der Einsatz von minderwertigen Echtlederspaltschichten möglich, die sich unterhalb der unmittelbaren Lederoberschicht ergeben. Durch den speziellen Aufbau kann dadurch eine Aufwertung erzielt werden. Der Mehrschichtaufbau kann Schichtdicken aufweisen, die sich bei konventionellen Ledern ausschließen. Dies kann für spezifische Anwendungen, zum Beispiel besondere akustische Adsorption, Adsorption von Schlag- und Aufprallenergie, Vorteile ergeben. Eine Adsorption von Schlagund Aufprallenergie ist mit konventionellen Ledern nahezu unmöglich, während sich bei erfindungsgemäßer Verwendung innerhalb der bevorzugten Ausführungsform bereits bei üblichen Dicken eine hohe Effektivität ergibt, was wiederum besonders bei Anwendungen im Fahrzeugbau von Vorteil ist.

Die Vorteile im Bereich der akustischen Adsorption, Adsorption von Schlag- und Aufprallenergie, ergeben sich jedoch prinzipiell bei erfindungsgemäßer Verwendung eines Polyvinylchlorid-Schaummaterials, ohne auf die Anwendung mit einer Echtlederschicht beschränkt zu sein.

Weitere Merkmale und Vorteile des Gegenstands der vorliegenden Erfindung werden aus den folgenden Beispielen offensichtlich, die lediglich als veranschaulichend und nicht als begrenzend für den Gegenstand der vorliegenden Erfindung zu betrachten sind.

### Beispiel 1

Zur Herstellung eines PVC-Schaummaterials wird eine Schaumfolie in einem indirekten Beschichtungsverfahren hergestellt. Dazu wird zunächst ein üblicher Oberstrich aus dispergiertem PVC angewendet, der aus etwa 55 Gew.-% PVC, etwa 30 Gew.-% Weichmacher, etwa 10 Gew.-% Pigmentabmischung und 0,8 bis 5,0 Gew.-% Stabilisatoren aufgebaut ist.

Ferner wird ein Schaumplastisol hergestellt, das im Vergleich zum oben beschriebenen Oberstrich einen etwas höheren Anteil an PVC enthält, wobei n-Pentan enthaltende Hohlkugeln aus Polyurethan oder Polyacetonitril in einem Mengenanteil von 0,5 bis 10 Gew.-%, vorzugsweise 2,0 bis 6,0 Gew.-%, eingemischt werden. In einer Ausführungsform kann diese Mischung zusätzlich konventionelle Treibmittel in einer Menge von bis zu 3,0 Gew.-% enthalten.

Bei der Auswahl des PVC ist auf eine gute Verschäumbarkeit zu achten. Insbesondere sollte der Schwerpunkt gerichtet werden auf die Anpassung des Erweichungspunktes des PVCs an das Erweichungs-/Ausdehnungsverhalten des PUR-Hohlkörpermaterials, was über die Auswahl eines geeigneten K-Wertes problemlos möglich ist. Durch die Anwendung geeigneter Kicker in angepaßter Menge kann das Aufschäumverhalten eines zusätzlich beigefügten konventionellen Treibmittels bis zur üblichen Effektivität angepaßt werden.

Die PVC-Dispersionen werden in einem üblichen indirekten Beschichtungsverfahren auf einen Papierträger aufgerakelt, zuerst der beschriebene Oberstrich und anschließend der Schaum, woraufhin diese, vorzugsweise in Temperierkanälen, geliert werden. Schaumstriche werden üblicherweise mit einer Dicke von 0,08-0,80 mm aufgerakelt. Zur Erzielung von besonders hohen Dicken sind mehrere hintereinanderfolgende Aufträge möglich, wobei die vorangehende Schicht zumindest vorgeliert sein muß. Durch die gewählte Temperatur kann diese Schicht zwischen ungeschäumt, gleichzeitig vor- oder ausgeschäumt zur Anwendung kommen. Das Gelieren findet bei einer Temperatur im Bereich zwischen 160 und 200°C statt, wodurch sich eine Aufschäumung des Schaumplastisols um das 2-12-fache seines ursprünglichen Volumens ergibt. Im Gegensatz dazu ist bei herkömmlichen Schäumungsverfahren lediglich eine maximale Volumenvergrößerung um das vierfache erzielbar gewesen. Nach Gelierung der einzelnen Aufstriche wird eine Zwischenkühlung durchgeführt. Bevorzugt sollte beim Gelieren eine Öffnung des PUR-Hohlkörpermaterials bzw. Polyacetonitrilhohlkörpermaterials erzielt werden, um eine Rückverformung bei der Abkühlung weitestgehend auszuschließen.

Unter Einsatz der oben beschriebenen Verfahrensweise und unter Einsatz von 3 Gew.-% der PUR-Hohlkugeln bzw. PAN-Hohlkugeln könnte eine Schaumfolie mit einer Gesamtdicke von etwa 2,0 mm mit einem Flächengewicht von etwa 700 bis 850 g/m² im Gesamtaufbau und einer entsprechenden Dichte von etwa 350 bis 425 kg/m³ hergestellt werden. Die Dichte des erhaltenen Schaums betrug etwa 150 g/m². Das PVC kann in dem erhaltenen Schaummaterial in Anteilen von 40 bis 70% vorliegen. Herkömmliche Materialien benötigen für eine derartige Dicke üblicherweise ein Flächengewicht von etwa 1250 g/m², da dort das Aufschäumen des Schaummaterials nur bis zu einer minimalen Dichte von etwa 330 kg/m² möglich ist.

Das in diesem Beispiel erhaltene Material wird anschließend lackiert, wie es im Stand der Technik bekannt ist. Dabei ist zu beachten, daß eine im wesentlichen veloursartige Rückseite erhalten wird und deshalb die Lackauftragungstechnologie entsprechend einzustellen ist.

Das erhaltene Schaummaterial ist gegenüber üblichem PVC-Schaummaterial erheblich leichter und kann problemlos in üblichen Verarbeitungstechnologien, wie Tiefziehen oder Tiefpressen, weiter verarbeitet werden. Insbesondere ist eine Anwendung vorstellbar im Bereich des Fahrzeugbaus, wie z.B. als Türverkleidung, Türbrüstung, Türinsert-, A- und B-Säulenverkleidungen, diversen Innenabdeckungen und Armaturentafeln.

Neben der erheblichen Gewichtseinsparung lässt sich über die sehr gute Schaumverformbarkeit eine mit konventionellen Materialien nicht erzielbare, hervorragende Haptik wahrnehmen. Dies führt zu einer deutlichen Aufwertung der erstellten kaschierten Automobilinnenbauteile.

### Beispiel 2

Die in Beispiel 1 beschriebenen PVC-Dispersionen werden mit der Anwendung eines zusätzlichen Kaschierstriches und eines Gewirketrägers zu einem üblichen Automobilkunstleder verarbeitet. Als Kaschierstrich kann im Sinne einer Gewichtsreduzierung ebenfalls ein Schaum entsprechend Beispiel 1 zur Anwendung kommen. Die Herstellung erfolgt in einer üblichen Beschichtungsanlage mit drei Temperierkanälen. Der zweite Kanal wird hier zum Vorgelieren genutzt, während das Aufschäumen und Endgelieren des Schaums sowie das vollständige Ausgelieren der Kaschiermasse mit Einbindung des Gewirketrägers im dritten Kanal realisiert wird. Das Vorgelieren unterstützt die in Beispiel 1 beschriebene offenzellige Auslegung.

Nach Entformung von Releasepapier wird ein unbekannt leichtes PVC-Kunstleder im Flächengewichtsbereich von 420 bis 620 g/m² mit einer Dicke von 1,15 bis 1,40 mm erhalten. Das Kunstleder weist ebenfalls eine hervorragende Haptik auf, die mit vergleichbaren herkömmlichen PVC-Kunstledern nicht erzielbar ist. Das Kunstleder lässt sich ohne Einschränkungen zu einem Automobilsitzbezug vernähen oder als Bezugsmaterial für Insertanwendungen einsetzen.

### Beispiel 3

Ein Kunstleder wird analog zu Beispiel 2 erstellt. In Abweichung wird jedoch der Schaum hinsichtlich seines maximalen Aufschäumungsvermögens ausgenutzt. Dazu wird eine Menge von etwa 5 Gewichtsprozent PUR-Hohlkugeln oder PAN-Hohlkugeln (PAN = Polyacetonitril) eingesetzt. Die erzielbaren Schaumdicken können dabei 3 mm deutlich überschreiten. Damit ergibt sich ein ähnlicher Aufbau, der üblicherweise durch zusätzliches Einkaschieren eines PUR-Schaum erzielt werden muß. Da derartige Materialverbunde jedoch meistens über zusätzliche Verfahren wie Klebe- oder Flammkaschierung erhalten werden, ist durch das Herstellungsverfahren die Erstellung eines solchen Materialaufbaus unter Verzicht auf diese nachgelagerten Verfahren möglich, was zum einen energetisch günstiger ist und zum anderen ökologische Belastungen, insbesondere im Fall der Flammkaschierung ausschließt. Gleichfalls können Unverträglichkeitsreaktionen gegenüber systemfremden Materialien, wie reinen PUR-Schäumen, ausgeschlossen werden. Das erhaltene Material kann vorteilhaft z.B. zur Kaschierung von Insertspiegeln oder zum Bezug von Armstützen oder allgemein von Türinnenverkleidungen eingesetzt werden.

### Beispiel 4

Zur Herstellung einer üblichen Laderaumabdeckung, die im Automobilinnenraum eingesetzt werden kann, wird der in Beispiel 1 dargestellte PVC-Schaum durch Anwendung des direkten Streichverfahrens unmittelbar auf ein Gewebe aufgerakelt. Zur Verbesserung der Haftung können geeignete Haftvermittlersysteme zugesetzt werden. Bei anschließender Passage eines Trocknungskanals wird dieser Strich vorgeliert, vorzugsweise jedoch nicht aufgeschäumt. In der weiteren Abfolge wird dieser Strich mit einem konventionellen Oberstrich überdeckt. Beim Gelieren dieses Strichs wird gleichzeitig das Aufschäumen des vorangegangenen Strichs realisiert. Dabei wird sicher ausgeschlossen, daß die teilweise raue Oberflächenstruktur dieses aufgeschäumten Strichs sichtbar wird. Durch die dargestellte Technologie kann einerseits eine deutliche Gewichtsreduktion der PVC-Auflage im Vergleich zu herkömmlichen Laderaumabdeckungen erzielt werden. Zum anderen ist es besonders vorteilhaft, daß die Unebenheit der Gewebeträgeroberfläche weitestgehend egalisiert wird. Bei geeigneter Einstellung des Schaums über den Anteil der PUR-Hohlkugeln oder PAN-Hohlkugeln kann das Gewicht einer einseitigen Laderaumabdeckung um 10 bis 70 Gewichtsprozent reduziert werden.

### Beispiel 5

Der Vorgehensweise aus Beispiel 4 wird gefolgt. Dabei ist der Schwerpunkt jedoch vordergründig auf die Anwendung besonders unebener Gewebestrukturen und deren Einebnung gerichtet, während die Gewichtseinsparung nicht im Vordergrund steht. Diese Gewebestrukturen können sich aus technischen Zielstellungen ergeben, z.B. bevorzugt einseitige Festigkeitsorientierungen oder aus Aspekten der Kosten.

### Beispiel 6

Eine Fertigung einer Laderaumabdeckung erfolgt wie in Beispiel 4, wobei hier jedoch die Überschichtung mit einem kompakten Strich entfällt. Das Aufschäumen kann bereits beim Gelieren des ersten Strichs erfolgen, ein Vorgelieren ist zur Ausbildung der beabsichtigen Veloursoberfläche jedoch vorteilhaft. Beim endgültigen Gelieren und Aufschäumen kann eine sehr weiche Veloursoberfläche mit interessanter haptischer Anmutung erzielt werden. Dazu werden vorzugsweise 1-5 Gewichtsprozent an PUR-Hohlkugeln oder PAN-Hohlkugeln eingesetzt. Ein Schutz der Oberfläche ist über einen Spritzlackauftrag möglich. Diese Veloursoberfläche kann einseitig mit einer konventionellen Ausführung der anderen Materialseite erfolgen, sie ist jedoch auch beidseitig möglich.

Insbesondere sind neben einer optisch oder haptisch interessanten Oberfläche gleichzeitig Effekte wie Geräuschdämmung, Vermeidung von Knarzgeräuschen bei Relativbewegungen zu anderen Materialoberflächen zu erzielen. Eine erhöhte Wärmedämmung derartiger Schichten kann ebenfalls genutzt werden.

### Beispiel 7

Eine übliche Echtlederhaut wird in Spaltschichten aufgeteilt. Die Lederoberschicht wird mit einer Dicke von etwa 0,5 mm lackiert und geprägt. Ein PVC-Schaummaterial mit einer Schichtdicke von 2,00 mm wird unter Verwendung eines üblichen Polyurethandispersionsklebers aufgebracht, wobei der Kleber auf dem Schaummaterial oder der Rückseite der Echtlederoberschicht oder beiden aufgetragen werden kann. Das PVL-Schaummaterial war erfindungsgemäß. In einer beheizbaren Presse wird bei etwa 80 bis 120°C die Lederoberschicht mit dem PVC-Schaummaterial verklebt. Dies ist ebenfalls über kontinuierliche Verfahren - Verpressung in Walzenspaltanordnungen und anschließendem Härten im Trockenkanal - möglich. Der erhaltene Mehrschichtaufbau kann auch insgesamt lackiert und gerastert werden. Auch können anstelle der Lederoberschicht minderwertige Unterspaltschichten eingesetzt werden.

### Beispiel 8

Ein erfindungsgemäßes PVC-Schaummaterial mit einer Dicke von 2,0 mm wird in einem kontinuierlichen Klebekaschierverfahren mit einem üblichen Kunstledergewirke rückseitig kaschiert. Auf diesem Materialverbund wird wiederum wie in Beispiel 7 dargelegt eine Lederschicht von etwa 0,5 mm aufkaschiert. Entsprechend können auch Lederunterspaltschichten eingesetzt werden.

Beste Ergebnisse wurden für die Erfindung erhalten, wenn beim Polyvinylchlorid-Schaummaterial Hohlkugeln aus Polyurethan oder Polyacetonitril oder Mischungen derselben eingesetzt wurden.

Die in der vorstehenden Beschreibung und in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verwendung eines Polyvinylchlorid- Weichschaummaterials im Fahrzeugbau, wobei das PVC-Weichschaummaterial eine Dichte von 100-300 kg/m³ aufweist und dadurch hergestellt wird, dass dispergiertes Polyvinylchlorid mit Hohlkugeln aus einem thermoplastischen Kunststoffmaterial, die eine niedrig siedende Flüssigkeit mit einem Siedepunkt von unter 110°C enthalten, vermischt und die erhaltene Mischung geliert wird, um einen Schaum zu ergeben, **dadurch gekennzeichnet, dass** das dispergierte PVC PVC-Vinylacetat-Copolymer in einem Anteil von 15 - 25 Gewichtsprozent, bezogen auf den gesamten PVC-Anteil, umfasst.

2. Verwendung nach Anspruch 1, **dadurch gekennzeichnet, dass** das thermoplastische Kunststoffmaterial ausgewählt ist aus Polyurethan, Polyolefin, Poly(meth)acrylat, Polyacrylnitril, Polyacetonitril, Copolymeren derselben, Silikon und Mischungen derselben.

3. Verwendung nach Anspruch 2, **dadurch gekennzeichnet, dass** die Hohlkugeln aus Polyacetonitril, Poly(meth)acrylat oder Mischungen derselben sind.

4. Verwendung nach Anspruch 2, **dadurch gekennzeichnet, dass** thermoplastisches und/oder elastisches Polyurethan ausgewählt wird, das vorzugsweise weichmacherresistent ist.

5. Verwendung nach einem der vorangehenden Ansprüche, **dadurch gekennzeichnet, dass** die Mischung ferner Weichmacher, Pigmente und/oder Stabilisatoren umfasst.

6. Verwendung nach einem der vorangehenden Ansprüche, **dadurch gekennzeichnet, dass** die Hohlkugeln in einer Menge von 0,5 bis 10 Gewichtsprozent in der Mischung enthalten sind, basierend auf dem Gesamtgewicht der Mischung.

7. Verwendung nach einem der vorangehenden Ansprüche, **dadurch gekennzeichnet, dass** die Mischung ferner chemische und/oder physikalische Treibmittel umfasst.

8. Verwendung nach einem der vorangehenden Ansprüche, **dadurch gekennzeichnet, dass** das Gelieren bei einer Temperatur zwischen 150 und 220°C durchgeführt wird.

9. Verwendung nach einem der vorangehenden Ansprüche, **dadurch gekennzeichnet, dass** die niedrig siedende Flüssigkeit ausgewählt wird aus n-Butan, n-Pentan, n-Hexan und n-Heptan.

10. Verwendung nach einem der vorangehenden Ansprüche, **dadurch gekennzeichnet, dass** das thermoplastische Kunststoffmaterial mit einem thermoplastischen Erweichungsbereich zwischen 130 und 220°C ausgewählt wird.

11. Verwendung nach einem der vorangehenden Ansprüche, **dadurch gekennzeichnet, dass** die Größe der Hohlkugeln 5 bis 70 µm beträgt.

12. Verwendung nach einem der vorangehenden Ansprüche, **dadurch gekennzeichnet, dass** das Schaummaterial offenzellig ist.

13. Verwendung nach einem der vorangehenden Ansprüche, **dadurch gekennzeichnet, dass** das PVC-Schaummaterial ein Flächengewicht von 40 bis 900 g/m² aufweist.

14. Verwendung nach einem der vorangehenden Ansprüche im Fahrzeugbau als Innenraummaterial, Schaumfolie, Kunstleder oder Laderaumabdeckung.

15. Verwendung nach Anspruch 1, **dadurch gekennzeichnet, dass** die Dicke des PVC-Schaummaterials 0,5 bis 5,0 mm ist.

16. Verwendung nach einem der vorangehenden Ansprüche, **dadurch gekennzeichnet, dass** das Schaummaterial auf zumindest einer Oberfläche desselben eine Echtlederschicht aufweist.

17. Verwendung nach Anspruch 16, **dadurch gekennzeichnet, dass** die Echtlederschicht eine Lederoberschicht oder Spaltlederschicht ist.

18. Verwendung nach einem der Ansprüche 16 oder 17, **dadurch gekennzeichnet, dass** die Dicke der Echtlederschicht 0,1 bis 1,0 mm ist.

19. Verwendung nach einem der Ansprüche 16 bis 18, **dadurch gekennzeichnet, dass** die Echtlederschicht an das PVC-Schaumledermaterial preßkaschiert und/oder klebekaschiert ist.

## Claims

1. Use of a polyvinyl chloride flexible foam material in vehicle construction, wherein the PVC flexible foam material has a density of 100-300kg/m³ and is manufactured in that dispersed polyvinyl chloride is mixed with hollow spheres made from a thermoplastic plastic material which contain a liquid with a low boiling point having a boiling point of below 110°C, and the obtained mixture is gelled in order to produce a foam, **characterised in that** the dispersed PVC comprises PVC vinyl acetate copolymer in a proportion of 15-25 percent by weight, with regard to the total PVC proportion.

2. Use according to Claim 1, **characterised in that** the thermoplastic plastic material is selected from polyurethane, polyolefin, poly(meth)acrylate, polyacrylonitrile, polyacetonitrile, copolymers of the same, silicone and mixtures of the same.

3. Use according to Claim 2, **characterised in that** the hollow spheres are made from polyacetonitrile, poly(meth)acrylate or mixtures of the same.

4. Use according to Claim 2, **characterised in that** thermoplastic and/or elastic polyurethane is selected which is preferably plasticiser-resistant.

5. Use according to any one of the preceding claims, **characterised in that** the mixture further comprises plasticisers, pigments and/or stabilisers.

6. Use according to any one of the preceding claims, **characterised in that** the hollow spheres are contained in the mixture in a quantity of 0.5 to 10 percent by weight, based on the total weight of the mixture.

7. Use according to any one of the preceding claims, **characterised in that** the mixture further comprises chemical and/or or physical propellants.

8. Use according to any one of the preceding claims, **characterised in that** the gelling is carried out at a temperature between 150 and 220°C.

9. Use according to any one of the preceding claims, **characterised in that** the liquid with a low boiling point is selected from n-butane, n-pentane, n-hexane and n-heptane.

10. Use according to any one of the preceding claims, **characterised in that** the thermoplastic plastic material is selected having a thermoplastic softening range between 130 and 220°C.

11. Use according to any one of the preceding claims, **characterised in that** the size of the hollow spheres amounts to 5 to 70 µm.

12. Use according to any one of the preceding claims, **characterised in that** the foam material is open-celled.

13. Use according to any one of the preceding claims, **characterised in that** the PVC foam material has a basis weight of 40 to 900 g/m².

14. Use according to any one of the preceding claims in vehicle construction as an interior material, foam film, artificial leather or luggage compartment cover.

15. Use according to Claim 1, **characterised in that** the thickness of the PVC foam material is 0.5 to 5.0 mm.

16. Use according to any one of the preceding claims, **characterised in that** the foam material, on at least one surface of the same, has a real leather layer.

17. Use according to Claim 16, **characterised in that** the real leather layer is a leather upper layer or split leather layer.

18. Use according to any one of Claims 16 or 17, **characterised in that** the thickness of the real leather layer is 0.1 to 1.0 mm.

19. Use according to any one of Claims 16 to 18, **characterised in that** the real leather layer is press-laminated and/or adhesive-laminated onto the PVC foam leather material.

## Revendications

1. Utilisation d'un matériau en mousse souple en chlorure de polyvinyle (PVC) en construction automobile, le matériau en mousse souple en PVC ayant une densité de 100 à 300 kg/m³ et étant fabriqué en mélangeant du chlorure de polyvinyle dispersé avec des billes creuses en thermoplastique qui contiennent un liquide à bas point d'ébullition avec un point d'ébullition inférieur à 110°C et en gélifiant le mélange obtenu pour obtenir une mousse, **caractérisée en ce que** le PVC dispersé comprend un copolymère d'acétate de vinyle et PVC dans une proportion de 15 à 25% en poids, par rapport à la proportion totale de PVC.

2. Utilisation selon la revendication 1, **caractérisée en ce que** le thermoplastique est choisi dans le groupe suivant : polyuréthane, polyoléfine, poly(méth)acrylate, polyacrylonitrile, polyacétonitrile, copolymères de ceux-ci, silicone et mélanges de ceux-ci.

3. Utilisation selon la revendication 2, **caractérisée en ce que** les billes creuses sont en polyacétonitrile, en poly(méth)acrylate ou en un mélange de ceux-ci.

4. Utilisation selon la revendication 2, **caractérisée en ce que** l'on choisit du polyuréthane thermoplastique et/ou élastique qui est de préférence résistant aux plastifiants.

5. Utilisation selon l'une des revendications précédentes, **caractérisée en ce que** le mélange comprend en plus des plastifiants, des colorants et/ou des stabilisants.

6. Utilisation selon l'une des revendications précédentes, **caractérisée en ce que** les billes creuses sont contenues dans le mélange dans une proportion de 0,5 à 10% en poids, sur la base du poids total du mélange.

7. Utilisation selon l'une des revendications précédentes, **caractérisée en ce que** le mélange comprend en plus des agents moussants chimiques et/ou physiques.

8. Utilisation selon l'une des revendications précédentes, **caractérisée en ce que** la gélification est effectuée à une température comprise entre 150 et 220°C.

9. Utilisation selon l'une des revendications précédentes, **caractérisée en ce que** le liquide à bas point d'ébullition est choisi dans le groupe suivant : n-butane, n-pentane, n-hexane et n-heptane.

10. Utilisation selon l'une des revendications précédentes, **caractérisée en ce que** le thermoplastique est choisi avec une plage de ramollissement thermoplastique comprise entre 130 et 220°C.

11. Utilisation selon l'une des revendications précédentes, **caractérisée en ce que** la dimension des billes creuses est comprise entre 5 et 70 µm.

12. Utilisation selon l'une des revendications précédentes, **caractérisée en ce que** le matériau en mousse est à alvéoles ouvertes.

13. Utilisation selon l'une des revendications précédentes, **caractérisée en ce que** le matériau en mousse en PVC a un poids surfacique de 40 à 900 g/m².

14. Utilisation selon l'une des revendications précédentes en construction automobile comme matériau d'habitacle, feuille de mousse, similicuir ou revêtement de coffre.

15. Utilisation selon la revendication 1, **caractérisée en ce que** l'épaisseur du matériau en mousse en PVC est comprise entre 0,5 et 5,0 mm.

16. Utilisation selon l'une des revendications précédentes, **caractérisée en ce que** le matériau en mousse comporte, sur au moins une surface de celui-ci, une couche de cuir véritable.

17. Utilisation selon la revendication 16, **caractérisée en ce que** la couche de cuir véritable est une couche supérieure de cuir ou une couche de croûte de cuir.

18. Utilisation selon l'une des revendications 16 ou 17, **caractérisée en ce que** l'épaisseur de la couche de cuir véritable est comprise entre 0,1 et 1 mm.

19. Utilisation selon l'une des revendications 16 à 18, **caractérisée en ce que** la couche de cuir véritable est plaquée à la presse et/ou contrecollée sur le matériau en mousse en PVC.
